Europäisches Patentamt

European Patent Office.

Office européen des brevets

(19)

(11) Publication number: **0 055 978**

**A2**

(12) **EUROPEAN PATENT APPLICATION**

(21) Application number: **81850190.0**

(22) Date of filing: **16.10.81**

(51) Int. Cl.³: **B 66 F 9/06**

(30) Priority: **23.10.80 SE 8007462**

(43) Date of publication of application:
**14.07.82 Bulletin 82/28**

(84) Designated Contracting States:
**AT BE CH DE FR GB IT LI LU NL**

(71) Applicant: **Granlind, Ingmar**
**Skogshemsvägen 14**
**S-146 00 Tullinge(SE)**

(71) Applicant: **Bodin, Ove**
**Trädgardsgatan 12**
**S-216 00 Fjugesta(SE)**

(72) Inventor: **Granlind, Ingmar**
**Skogshemsvägen 14**
**S-146 00 Tullinge(SE)**

(72) Inventor: **Bodin, Ove**
**Trädgardsgatan 12**
**S-216 00 Fjugesta(SE)**

(74) Representative: **Lindblom, Erik J**
**Caroline Östbergs väg 5**
**S-122 35 Enskede(SE)**

(54) Truck.

(57) A truck exhibiting lifting devices (7) intended for the lifting of loads and pairs of wheels (5) located at a certain distance from each other and adjacent to said lifting devices. At a point mid-way between the wheels making up the pair of wheels (5) is support wheel (8) so arranged as to absorb some of the compressive forces acting upon the pair of wheels (5). The support wheel (8) is so arranged as to be forced against a base (9) by means of a device (12) consisting of a hydraulic piston and cylinder. The pressure inside said device is controlled by the pressure inside a load-lifting hydraulic piston and cylinder device (22).

The support wheel is pivotable or turnable in relation to the setting of the steering wheel.

Fig. 1

- 1 -

TITLE OF THE INVENTION:                    TRUCK

TECHNICAL FIELD

The present invention relates to a          truck and in
particular to  a ; kind of fork-lift truck which exhibits
lifting devices intended for the lifting of loads. Adjacent to
said lifting devices are normally situated pairs of wheels
located at a certain distance from each other intended to
withstand a force corresponding to the weight of the load and
that part of the service weight of the truck which is
distributed onto said front pairs of wheels. Also present are
pairs of wheels, usually steerable, by means of which the
truck may be manoeuvered.

It may, of course, be regarded as undesirable to designate
the pairs of wheels as the front pair of wheels and the rear
pair of wheels, since the truck must be capable of being
driven in both directions, in spite of which the following
specification will use the expression   front pair of wheels
in respect of the pair of wheels which will support the load
and which are driven, whilst the expression   rear pair of wheels
will be used in respect of the pairs of wheels which will
steer the truck. The principle of invention may also be
applied to articulated fork-lift trucks.

DESCRIPTION OF THE PRIOR ART

Previously disclosed are a number of different fork-lift
trucks which exhibit lifting devices intended for the lifting of loads, for example fork-trucks, said truck being equipped
with front pairs of wheels intended for driving the truck and
for supporting the load and rear pairs of wheels, the latter
usually being steerable thereby enabling the truck to be
manoeuvered with and/or without a load.

In the case of fork-lift trucks of the nature referred to
above the front pairs of wheels are dimensioned to support not
only that part of the service weight of the truck which is
distributed onto the front axle but also the load which can be
lifted and transported by the lifting devices.

It is clear that the axle loading which is produced at
full load and the corresponding compressive force exerted by
the wheels on the base will be high. It is not unusual to have
to reduce considerably the loading on the lifting devices at
the maximum capacity of the truck due to the fact that the
base on which the truck is being operated will not withstand
the forces which are concentrated into the pairs of front
wheels.

The torsional moment about the front axle must be selected
such that the torsional moment due to gravity and to the
position of the centre of gravity of the truck and the distance
to the front axle is greater than the torsional moment due to
gravity and to the position of the centre of gravity of the
load and the distance to the front axle or, more correctly,
the front support point of the truck.

It has been suggested different means to increase the loading
capacity of the truck. By the US Patent Specification 27 54 020 it is
suggested a free turnable wheel in front of caterpillar drive. By the
Swedish Patent Specification 316 722 it is suggested a further supporting
wheel adjacent the usually used wheels, in order to increase the bearing
strength on soft soil or base.

## DESCRIPTION OF THE PRESENT INVENTION

### TECHNICAL PROBLEM

A particular technical problem exists with regard to
trucks of the nature described above in being able to produce a truck of such a nature that the force exerted by the pairs of front wheels on the base at maximum load is less than the normally corresponding compressive force.

Accordingly, a specific technical problem exists in producing a device which is capable of absorbing a proportion, preferably an adjustable proportion, of the compressive forces acting on the pairs of front wheels.

It is irrational, because of the inability of the base to absorb the compressive forces resulting from the maximum load, to have to limit the weight of the load thereby only partially utilizing the capacity of the truck.

Thus the problem has been faced for a long time of distributing the compressive forces in such a way that the maximum load is able to rest on the lifting devices without in so doing exceeding the stipulated limit values in respect of the loading which may be applied to the base.

The aforementioned technical problem has proved particularly difficult to solve with regard to the loading and unloading of vessels where the trucks are required to pass over a base, in the form of cargo hatches, floorings and tank tops, etc., which are usually designed to withstand a certain level of stress and loading, said design levels being in respect of a loading below that produced by a truck when fully laden.

A specific problem also exists with regard to creating the possibility of regulating the degree to which the loading may be removed from the pairs of front wheels, which means that none of the loading need be removed if the base will withstand the compressive forces which are being applied to it, but that the loading will be regulated in such a way that the actual loading limit values will not be exceeded in the case of a base which has been designed to withstand only a certain loading.

One other problem which has been faced for a long time is the possibility of increasing the load-carrying capacity of a truck without the need to increase the distance between the axles or to attach ballast weights to the rear of the truck.

It has been proven to be especially difficult to fullfil all the above mentioned desires and yet create the possibility to have the support wheel be controlled by the fact that the support wheel is turnable depending upon the turning angle of the steering wheel.

## SOLUTION

The present invention relates to a truck of the nature described above, said truck having succeeded in solving the aforementioned problems.

For this purpose the invention proposes the installation between the pairs of front wheels of a support wheel designed so as to be capable of absorbing a proportion of the compressive forces normally acting on the pairs of front wheels.

The support wheel is also arranged so as to be capable of being forced down onto the base by means of a device consisting of a hydraulic piston and cylinder, and with the pressure in said device being controlled by the pressure supplied to a load-lifting hydraulic piston and cylinder device. This causes the direct transfer of the compressive force to the support wheel, said force increasing in proportion to the weight of the load.

The connection of an accumulator into the hydraulic system produces the advantage that said accumulator will absorb any momentary variations in pressure resulting from movements of the hydraulic piston in the support wheel cylinder, i.e. the support wheel will be caused to follow an uneven base at the same time maintaining the degree to which the compressive forces are removed from the wheels.

The invention also proposes the possibility of causing the support wheel to be free to pivot in relation to the position of a steering wheel, for which purpose the support wheel must be introduced into a holder which is not only free to pivot about a vertical shaft but is also capable of being raised and lowered along a horizontal shaft located at a certain distance.

The present invention also proposes a design in which the load-carrying capacity of the truck can be increased without the need for major design changes by positioning the support wheel between the front pair of wheels and the centre of gravity of the load thereby reducing the torsional moment generated by the load.

This arrangement enables the force on the front pair of wheels and its axle loading to be transferred to a different point on the base, this being a point closer to the centre of gravity of the load.

At last it has been given advises of an automatic adjustment of the position of the support wheel (turning position) in relation to the position of the steering wheel (turning position).

## ADVANTAGES

The advantages which may be regarded as being associated with a truck in accordance with the present invention are above all that said truck is able effectively to transfer and remove compressive forces on the front pair of wheels to a support wheel located between the front pair of wheels, and that the compressive force absorbed by the support wheel remains at an essentially constant value irrespective of any unevenness in the base. The support wheel has a vibration reducing effect when said truck is driven over an uneven base.

Furthermore, a truck designed for a certain load may be used for greater loads since the torsional moment produced by the load is less.

By turning the support wheel so it will run in the direction of movement for the truck, also by curves, it is created conditions for a smooth and vibration free movement of heavy loads.

What may be regarded as the principal characteristics of a truck in accordance with the present invention are indicated in the first characterizing section of the following Patent Claim.

## DESCRIPTION OF THE DRAWINGS

A preferred embodiment exhibiting the characteristic features of the present invention will now be described in greater detail with reference to the attached drawing, in which:

Fig. 1   shows a side view of a truck equipped with a support wheel in accordance with the present invention in greatly simplified form;

Fig. 2   shows a perspective view of the arrangement of the support wheel, with the lifting devices of the truck removed for purposes of clarity;

Fig. 3   shows a front view of the attachment of the support wheel to the truck;

Fig. 4   shows a mechanical design in which the support wheel is to pivot in relation to the position of a steering wheel;

Fig. 5   shows a hydraulic circuit including a device for accumulating hydraulic pressure;

Fig. 6   shows an alternative embodiment of the attachment of the steering wheel;

Fig. 7   shows a hydraulic circuit for the steering function; and

Fig. 8   shows a further alternative embodiment of the attachment of the steering wheel.

## DESCRIPTION OF THE PREFERRED EMBODIMENT

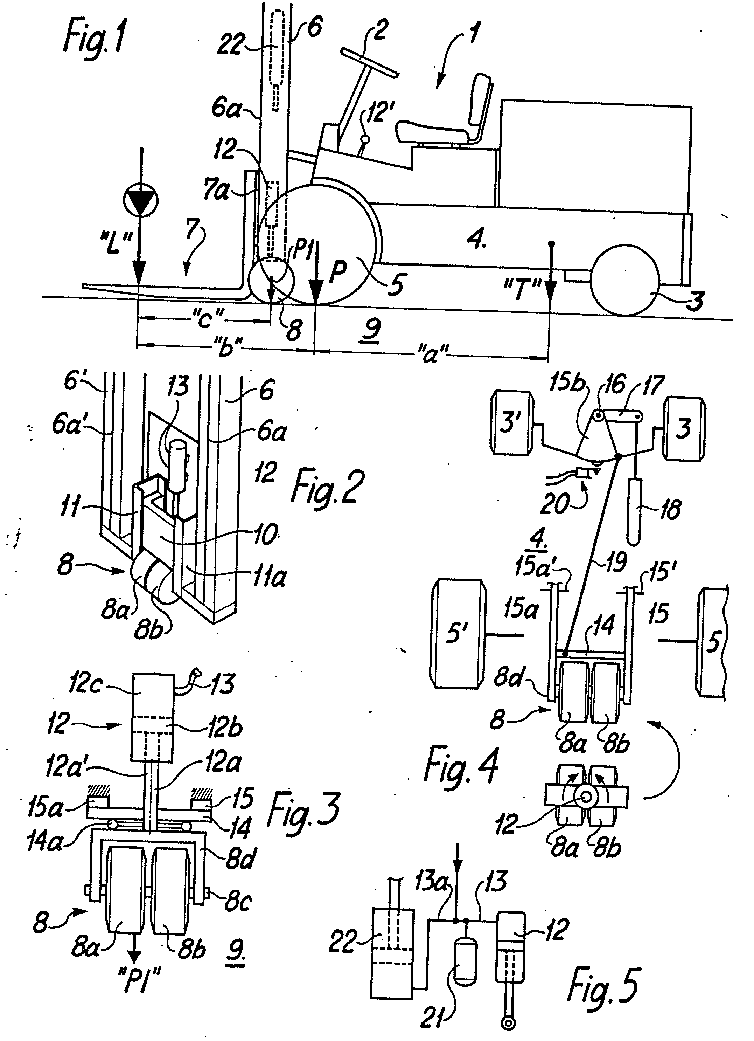

Fig. 1 shows a greatly simplified side view of a truck  1 fitted with a steering wheel  2  which, when turned, will cause rear wheels  3  to turn which are arranged in pairs and are attached to a frame assembly  4  of which the front part supports more heavily dimensioned pairs of front wheels  5 with a greater load-carrying capacity. The pairs of front wheels  5  are dimensioned so as to be capable of absorbing compressive forces corresponding to that part of the service weight of the truck which is distributed onto the pairs of front wheels and a maximum load  'L'  placed on the lifting devices  7 .

The front part of the truck  1  is fitted with vertically extending parallel masts  6  and  6'  , along which the lifting devices  7  are free to move. For this purpose the lifting devices  7  have on the one hand a sliding surface facing the mast and on the other hand an organ  7a  which operates in conjunction with an organ inside the masts. Movement of the lifting device  7  along the mast  6  takes place with the help of a device not shown in Fig. 1 consisting of a hydraulic piston and cylinder operating in conjunction with the organ.

The pairs of front wheels  5  are at least two in number, of course, and are located at a certain distance from each other. It is not unusual, however, to have double pairs of front wheels, which means that the front wheels are four in number and are arranged in pairs located at a certain distance from each other. As far as the rear wheels  3  are concerned, these are normally located at a certain distance from each other and are two in number.

The present invention relates to the possibility of arranging a support wheel  8  between the pairs of front wheels  5  , said support wheel having to be capable of absorbing a proportion of the compressive force  P  acting on the pair of front wheels  5  , partly due to the load  7  , and applied to the base  9 . The support wheel  8  is located between the front wheels  5  and the load  'L' .

The load-carrying capacity of a truck is normally limited by the fact that the torsional moment  T x a  must be greater than the torsional moment of the maximum load  L x b , although the torsional moment  L x b  is reduced considerably by the present invention, at the same time as the axle loading is distributed to other points on the base.

The support wheel  8  , which is shown in Fig. 2 to consist of two support wheels  8a  and  8b  located adjacent to each other and free to rotate about the same axle, is attached by means of a support wheel axle and a holder  8d  to a plate  10 , which is held in channels  11 , 11a  in such a way that the plate  10  may be caused to move up and down.

This up and down movement is produced by a device 12 consisting of a hydraulic piston and cylinder with connections 13 .

This arrangement makes it possible, via a distributor 12' positioned next to the driver, for hydraulic pressure to be applied to the cylinder device 12 , thereby causing the plate 10 with its attached wheels 8 to be forced against the base 9 with a force P1 , thereby causing the compressive force P from the pair of wheels 5 to be reduced to a corresponding degree.

The distributor 12' enables the compressive force 'P1' acting on the base 9 and generated by the hydraulic piston and cylinder device to be controlled.

It is important in this connection that the wheel 8 should be capable of being raised out of contact with the base 9 , especially when the truck is turning, since any tight turn by the truck would cause the wheel 8 to move sideways, resulting in a high level of wear.

In order to eliminate this inconvenience, the present invention proposes an additional embodiment in which the wheel 8 is attached by means of a common axle 8c to a holder 8d in such a way that it is free to rotate. The holder 8d operates in conjunction with a piston-rod 12a , of which the piston 12b is mounted in a cylinder 12c . In this way, hydraulic pressure applied via the pipework 13 to the piston 12 will cause a compressive force P1 to be applied to the base 9 .

The support wheel 8 may also be fitted with a control device which will respond to any deflection of the steering wheels 3 and 3' . The support wheel is angled in the horizontal plane to follow the steering geometry of the truck. Even when this device is fitted, it may be desirable to be able to control the piston 12b so that the wheel 8 is not forced against the base 9 .

An example of a conceivable control arrangement of this kind is illustrated in Fig. 4 , in which a holder 8d is so arranged as to be free to pivot about a central axle 12a' for the piston-rod 12 located by means of a bearing device 14a between the holder 8d and a support 14 . The support 14 operates in conjunction with parallel arms 15 , 15a attached to the frame assembly or chassis 4 by means of a pivoting axle 15' and 15a' in such a way as to be free to pivot. In this way the wheel 8 can be caused to move up and down, as shown in Fig. 3, which means that the wheel will adapt to and follow any unevenness in the base 9 .

Fig. 4 shows the manner in which the pairs of front wheels 5 and 5' and the pairs of rear wheels 3 and 3' are located in relation to each other, and with the help of the steering wheel 2 a segment 15b is caused to rotate about a pivoting axle 16 . This takes place by means of an arm 17 connected to a hydraulic piston and cylinder device 18 . Rotation of the segment 15b will cause the pair of wheels 3 and 3' to turn, although the rotation is also linked via an arm 19 to the holder 8d for the wheel 8 . With the help of the arm 19 the support wheel 8 will be caused to rotate about the axle 12a' in relation to the turning of the wheels 3 , which means that the aforementioned wear will be eliminated. Even when this device is fitted, it may be desirable to be able to control the piston 12b so that the wheel 8 is not forced against the base 9 .

A second embodiment has the wheel 8 operating via a piston device, so that the wheel 8 is able to follow any unevenness in the base causing a control arrangement to act on the piston-rod or to cause it to extend. Any deflection of the control arrangement will take place in relation to the deflection of the steering wheels and the steering geometry of the truck.

The reference designation 20 is used to indicate a micro-switch, which may be connected to the distributor or operating lever 12! in such a way that, when the pair of wheels 3 , 3' turns, the effect of the hydraulic piston and cylinder arrangement will cease, and that, as soon as the pairs of wheels 3 , 3' adopt the position shown in Fig. 4,

·the hydraulic piston and cylinder arrangement will cause the support wheel 8 to be forced against the base 9 .

For the purpose of providing automatic balancing of the pressure inside the hydraulic piston and cylinder arrangement 12 the present invention proposes that the pipework 13 be connected to an accumulator 21 , said pipework 13 operating via pipework 13a in conjunction with a cylinder 22 intended to raise and lower the lifting device 7 . The cylinders 22 are positioned inside or between the masts 6 , 6' .

It is recommended that 12' and 20 be connected in parallel, thus enabling either manual or automatic control of the movement of the piston 12b to be selected.

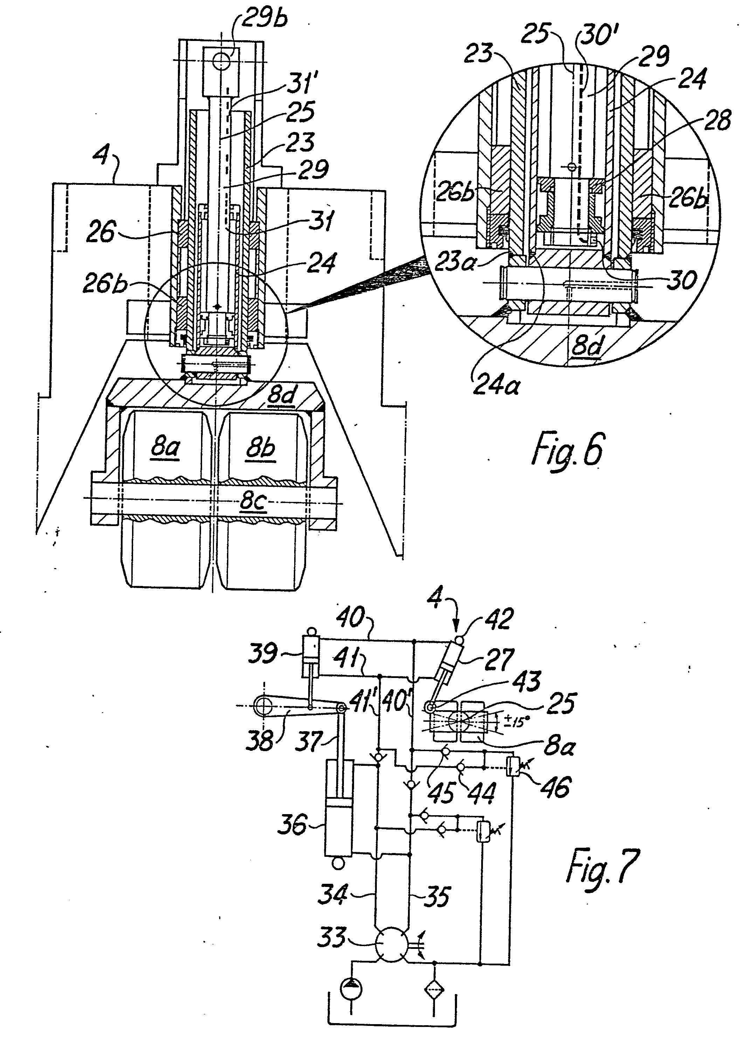

With reference to Fig. 6 it is shown an alternative embodiment of the attachment of the support wheel in the frame 4. Support wheels 8a, 8b are turnable arranged to a shaft 8c, which is attached to a holder 8d. The upper central portion of the holder 8a cooperates partly with a guiding tube 23 (shown as a sectionalled cut) partly with a bottom portion 24a of a hydraulic cylinder 24. The bottom portion 23a of the guiding tube 23 and the bottom portion 24a of the hydraulic cylinder 24 are rigidly attached to the holder 8d.

The holder 8d may be turned around a central axis 25, which also is the central axis for the piston rod 29, by the fact that the tube 23 has a bearing at 26 for rotation and axial movement. The holder 8d may be turned by only in Figure 7 shown hydraulic piston and cylinder arrangement 27.

The holder 8d may be raised or lowered (in the figures the holder 8d is shown in its uppermost position). This is caused by the fact that the bottom portion of the hydraulic cylinder 24 is attached to the holder 8d and the hydraulic piston 28 is fixed. The upper portion of the piston rod is fixed to the frame of the truck. Hydraulic pressure acting on the under surface of the piston 28 presses the hydraulic cylinder 24 downwards and a pressure acting on the upper surface of the piston 28 presses the hydraulic cylinder upwards. Ducts 30ʼ and 31ʼ having orifices 30 and 31 are arranged within the piston rod and terminate at not shown connection portions in the upper portion 29b of the rod 29. The fixed attachment of the upper poriton 29b for the piston rod 29 is not shown.

Referring to Figure 7 it is shown a hydraulic circuit for the steering function. One previously known control valve 33 is arranged for controlling the hydraulic pressure and the flow through the conduits 34 and 35 to a hydraulic piston and cylinder device 36, where the piston rod 37 actuates one in the steering mechanism included steering arm 38 attached to the steering wheels. The arm 38 cooperates with a first hydraulic piston and cylinder device 39, which via conduits 40, 41 is connected to a second hydraulic piston and cylinder device 27. The devices 39 and 27 may preferably be identical.

The hydraulic piston and cylinder device 27 is connected at 42 to the frame 4 of the truck and at 43 to the edge portion of the holder 8d, for causing a turning motion of the support wheels 8a, 8b around the axis 25.

A displacement of the piston in the device 39 causes a corresponding displacement of the piston in the device 27, thus causing a turning of the support wheels in dependence of the setting of the steering wheel 3.

In order to asure that the support wheels 8a, 8b follow exactly the setting and turning of the steering wheel 3 it is arranged that a leakage will cause the support wheels into a terminal position before the steering wheel comes into its terminal position. In such a case the terminal position of the support wheels will cause a raise in the pressure, which is transferred through the conduits 40ʹ, 41ʹ via a check valves (nonreturn valves) 44, 45 to a overflow or over pressure valve 46, which causes, when the steering wheel 3 is moved from its terminal position, that the support wheels 8 follow the turning. Said overflow valve is intended to cause a specific position (terminal position) for said support wheel 8 when the steering wheel 3 is brought into a specific position (terminal position).

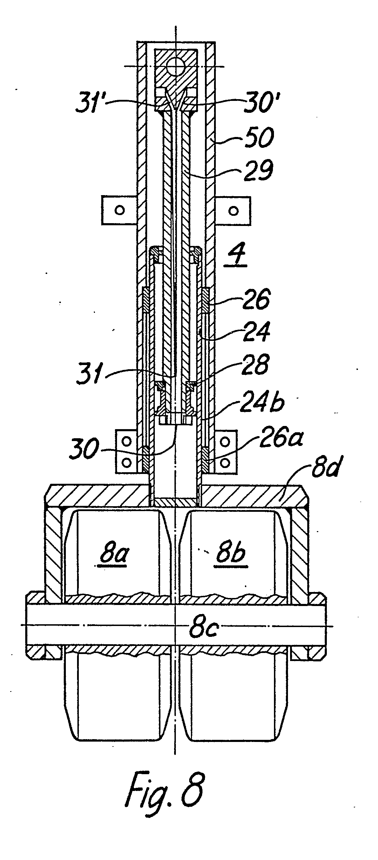

Referring to Figure 8 it is shown a further embodiment of the device according to Fig. 6. In this embodiment the guiding tube 23 is eliminated because the outer surface 24b of the cylinder 24 has a slip fit to the bearing devices 26, 26a, which are attached to the frame 4. It is suggested that a tubular device 50, fixed to the frame 4, shall support the bearing device 26, 26a. The remaining parts in Figure 8 have been given the same reference numerals as in the embodiment according to Figure 6. The connecting conduits 30´ and 31´ have been shown.

The present invention is not, of course, restricted to the preferred embodiment indicated above by way of an example, but may undergo modifications within the scope of the following Patent Claims.

PATENT CLAIMS.

1.  A truck exhibiting lifting devices (7) intended for the lifting of loads and standard pairs of wheels (5) located at a certain distance from each other and adjacent to said lifting devices together with one or more support wheels (8) located between the standard wheels making up the pair of wheels (5), said support wheel or wheels (8) being so arranged as to absorb a proportion of the compressive forces due to the weight of the load acting upon the standard pair of wheels (5), said support wheel (8) being so arranged as to be forced against a base (9) by means of a device (12) consisting of a hydraulic piston and cylinder, preferably in such a way that the pressure in said device is controlled by the pressure inside a load-lifting hydraulic piston and cylinder device (22), c h a r a c t e r i z e d  in that an axle (8c) for the support wheel (8) is arranged at a certain distance ahead of an axle for the standard front pair of wheels (5), in that the support wheel (8) is so arranged as to absorb a proportion of axle load due to the weight of the load acting upon the standard pair of wheels (5), that the support wheel (8) is free to pivot and that means (19, 14) cooperates with the support wheel (8) to cause a turning of said support wheel in relation to the position of the steering wheels (3, 3˝).

2.  A truck according to claim 1, c h a r a c t e r i z e d  in that said support wheel (8) is pivotable directly in relation to the turning of the steering wheel.

3.  A truck according to claim 1, c h a r a c t e r i z e d  in that, the support wheel (8) is introduced into a holder (8d), which on the one hand is so arranged as to pivot about a vertical shaft (12a˝) and on the other hand may be raised and lowered.

4.  A truck according to claim 1, c h a r a c t e r i z e d  in that an accumulator (21) is connected into the system in order to absorb any apparent variations in pressure attributable to the movement of the support wheel (8) resulting from unevenness in the base.

5. A truck according to any of the preceding claims, c h a r a c -
t e r i z e d in that, the upper part of the support wheel cooperates
with a hydraulic cylinder and associated piston and piston rod and that
said support wheel (8) is turnable around a central axis arranged within
the piston rod.

6. A truck according to claim 5, c h a r a c t e r i z e d in that,
said piston rod is fixed at its upper portion and that the cylinder is
movable along the piston rod in order to cause the support wheel to be
raised and/or lowered and that hydraulic fluidum is connected to spaces
at each side of the piston via conduits in the piston rod.

7. A truck according to claim 5 or 6, c h a r a c t e r i z e d in
that, around the hydraulic cylinder (24) extends a tube (23) guided for
axial displacement and rotation in the frame (4) of the truck.

8. A truck according to any of the preceding claims, c h a r a c -
t e r i z e d in that, the steering wheels (3, 3´) steering device is
connected to a first hydraulic piston and cylinder device (39), which
via conduits (40, 41) is connected to a second hydraulic piston and
cylinder device (27), connected between the frame (4) and the rotation
(25) of the support wheel, and that an over flow valve or pressure valve
(46) is arranged to cause a specific position (terminal position) for
said support wheel (8) when the steering wheel (3) is brought into a
specific position (terminal position).

9. A truck according to claim 1, c h a r a c t e r i z e d in that
the pressure in the hydraulic piston and cylinder device connected to
the steering wheel (8) is directly connected to the load-lifting hydraulic piston and cylinder device (20).

10. A truck exhibiting lifting devices (7) intended for the lifting
of loads and standard pairs of wheels (5) located at a certain distance
from each other and adjacent to said lifting devices together with one or more support wheels (8) located between the standard wheels making up the pair of wheels (5), said support wheel or wheels (8) being so arranged as to absorb a proportion of the compressive forces due to the weight of the load acting upon the standard pair of wheels (5), said support wheel (8) being so arranged as to be forced against a base (9) by means of a device (12) consisting of a hydraulic piston and cylinder, preferably in such a way that the pressure in said device is controlled by the pressure inside a load-lifting hydraulic piston and cylinder device (22), c h a r a c t e r i z e d in that an axle (8c) for the support wheel (8) is arranged at a certain distance ahead of an axle for the standard front pair of wheels (5), in that the support wheel (8) is so arranged as to absorb a proportion of axle load due to the weight of the load acting upon the standard pair of wheels (5), and that said hydraulic piston and cylinder device (12) is connected or disconnected in dependence of the setting of a distributor (12´).

11. A truck according to claim 10, c h a r a c t e r i z e d in that the distributor is controlled by the setting of the steering wheel (3) in such a way that the hydraulic piston and cylinder device (12) is disconnected by large turning and connected by less turning of the steering wheel.

Fig.1

Fig.2

Fig.3

Fig.4

Fig.5

Fig.6

Fig.7

Fig. 8